# EUROPEAN PATENT APPLICATION

(11) **EP 4 297 227 A1**
(43) Date of publication of application: **27.12.2023**
(21) Application number: 22180533.6
(22) Date of filing: 22.06.2022
(51) Int. Cl.: H02J 3/28, F17C 5/06, H02J 15/00

(54) **HYDROGEN FUELING STATION**

(71) Applicant: HyMatters B.V., 6836 ML Arnhem (NL)
(72) Inventor: Tazelaar, Edwin, 6836 ML Arnhem (NL)
(74) Representative: De Vries & Metman

(57) **Abstract**

Fueling station for hydrogen powered devices comprising:
- a hydrogen generator, such as an electrolyser;
- a compressor in communication with the hydrogen generator;
- hydrogen storage containers;
- a feed line extending from the compressor to inlet valves of the one or more hydrogen storage containers;
- a dispensing facility;
- a dispense line connecting the hydrogen storage containers to the dispensing facility, a power connection connecting the hydrogen generator to a power grid fed by intermittent power sources. The power connection is configured to power the hydrogen generator when the power grid is overloaded.

## Description

The invention relates to a hydrogen fueling station for fueling hydrogen powered devices, e.g., fuel cell devices, such as vehicles or stationary appliances. The invention also relates to a process of fueling hydrogen powered devices.

Renewable power sources, such as solar cells or wind turbines, generate an intermittent supply of electricity. This is problematic where such intermittent sources feed the electricity distribution grid and challenge balancing of the grid. Traditionally, electricity grids are configured to distribute centrally generated electricity from a power station to a large number of consumers. Presently, increasing numbers of consumers locally generate electricity by themselves, e.g., by means of solar cells, feeding surplus electricity back to the grid creating a two-way traffic on the grid. Since connected solar cells typically peak simultaneously during moments of sunny weather, mismatches between supply and demand increase and solar cells must be switched off for safety reasons at moments of their highest productivity.

One of the approaches of storing electricity and balancing demand and supply on the grid is to use the peaks for the generation of hydrogen. It is an object of the invention to provide a system that can effectively be used for grid balancing with a grid at least partly fed by intermittent power supply.

The object of the invention is achieved with a fueling station for hydrogen powered devices, comprising:
- a hydrogen generator;
- a compressor in communication with an outlet of the hydrogen generator;
- one or more hydrogen storage containers;
- a feed line extending from an outlet of the compressor to inlet valves of the one or more hydrogen storage containers;
- a dispensing facility;
- a dispense line connecting the one or more hydrogen storage containers to the dispensing facility,
- a power connection connecting the hydrogen generator to a power grid, in particular a power grid at least partially fed by intermittent power sources, such as solar cells and/or wind turbines. The power connection can be configured to power the hydrogen generator when the power grid is overloaded, e.g., by peak production of the intermittent power sources. In this respect, the power grid can be considered overloaded when the power quality deviates from predefined specifications as a result from peak supplies by the intermittent power sources. The predefined specification can for example be the specifications set out in European standard EN 50160 or US standard IEEE-519. Optionally, sensors can be used to monitor power quality, such as phasor measurement units (PMU's). More particularly, the power grid can be considered overloaded in case of an overvoltage, e.g., if the voltage exceeds a set value, e.g., if the voltage is more than 10% above nominal design voltage, e.g., if the voltage is more than 253 V.

This way, load peaks in the power grid, e.g., caused by power supply peaks from intermittent power sources, in particular solar cells, can be used to generate hydrogen to store energy and to balance demand and supply on the power grid.

Some hydrogen fueling stations employ a cascade of hydrogen storage containers. The cascade can for example comprise low, mid and high pressure storage containers. A vehicle can first be connected to the low pressure storage container and equalized, then it can be connected to the mid pressure storage container, and lastly to the high pressure storage container. Such a system optimizes the utilization of stored hydrogen by reducing the amount of hydrogen drawn from the high pressure storage container. This saves energy for compression and cheaper storage tanks can be used for the lower pressure storage containers.

US 2006/118575 relates to multi compressor systems and apparatuses for the manufacture, storage and dispensing of hydrogen fuel to hydrogen powered vehicles. Hydrogen from a hydrogen source is directed to a compressor and subsequently from the compressor to a cascading processing array and from there to a dispensing facility.

According to the present disclosure, a fueling station is provided comprising a cascading array of hydrogen storage containers, each having an inlet valve, a dispense valve, and a re-pressurization valve;
wherein a feed line connects the inlet valves to a compressor and a dispense line connects the dispense valves to a dispensing unit;
the fueling station further comprising a re-pressurization line connecting each of the re-pressurization valves to the feed line via the compressor.

In such a configuration, a single compressor can be used for feeding the hydrogen storage containers and for repressurizing the hydrogen storage containers.

In a particular embodiment, one or more of the hydrogen storage containers comprises a container head encasing the inlet valve, the dispense valve and/or the re-pressurization valve, and solenoids driving the inlet valve, the dispense valve and/or the re-pressurization valve.

The hydrogen generator can for example be an electrolyser connected to a water reservoir by a water feed line. Particularly suitable are PEM electrolysers, which can typically be operated with a variable power feed, e.g., from intermittent power sources.

Optionally, one or more of the hydrogen storage containers can be positioned within the water reservoir feeding the electrolyser, more particularly below water level. With such a configuration, leakage is easy to detect and optimal use is made of the available space.

The present disclosure further pertains to a fueling station for fuel cell devices, the fueling station comprising:
- a hydrogen generator;
- a compressor in communication with an outlet of the hydrogen generator;
- one or more hydrogen storage containers;
- a feed line extending from an outlet of the compressor to inlet valves of the one or more hydrogen storage containers;
- a dispensing facility;
- a dispense line connecting the one or more hydrogen storage containers to the dispensing facility;
- an intermediate hydrogen storage container between the hydrogen generator and the compressor. Such an intermediate storage container serves as a buffer between the electrolyser which can smooth off variations of pressure between the electrolyser and the compressor. It also allows to use a simpler compressor which can be operated by a simple on/off control. The use of such an intermediate hydrogen storage container also helps to prevent low pressure at the discharge side of the electrolyser, which could cause migration of oxygen into the hydrogen discharge flow, increasing a risk of oxygen pollution of the generated hydrogen and eventually the risk of explosion.

The dispensing facility can provide a temporary connection for vehicles to be refueled, or a permanent connection, e.g., for a heating installation or production facility.

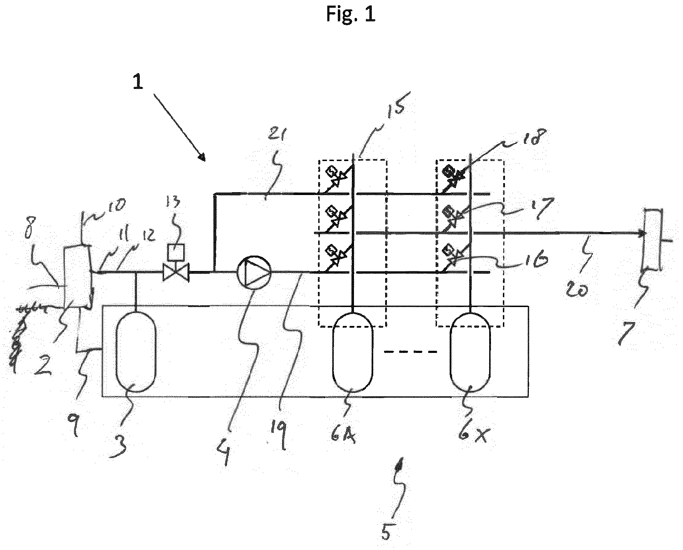

The invention is further explained with reference to the accompanying drawing showing an exemplary embodiment. In the drawing, Figure 1 shows a schematic lay out of an exemplary embodiment of a fueling station of the present invention.

Figure 1 shows a fueling station 1 for generating, storing and dispensing hydrogen to hydrogen powered devices, in particular vehicles. The fueling station 1 comprises an electrolyser 2 serving as a hydrogen generator, an intermediate hydrogen storage container 3, a compressor 4, a cascade 5 of hydrogen storage containers 6A - 6X and a dispensing facility 7.

The electrolyser 2 has a water feed inlet 8, a power feed connection 9, an oxygen outlet 10, and a hydrogen outlet 11. A line 12 connects the hydrogen outlet 11 to the intermediate hydrogen storage container 3. A second line connects the intermediate storage container 3 to a valve 13 and subsequently to the compressor 4.

The cascade 5 can comprise two or more of hydrogen storage containers 6A - 6X. The storage containers can be separate cylinders or a bundle of tanks in a common container. In Figure 1 only the first hydrogen storage container 6A and the last storage container 6X are shown. Between the first and last storage container, one or more additional storage containers can be used. The cascade 5 can for example comprise low, mid and high pressure storage containers 6A - 6X. In a particular embodiment the cascade 5 comprises a low pressure container 6A (e.g., 200 bar), a mid-pressure container (e.g., 350 bar) and a high pressure container (e.g., 500 or 800 bar).

The hydrogen storage containers 6A - 6X and the intermediate hydrogen storage container 3 are positioned in a water reservoir 14 feeding the electrolyser 2 via the water feed line 9. Each hydrogen storage container 6A - 6X comprises a cylinder head 15 comprising an inlet valve 16, a dispense valve 17 and a repressurizing valve 18. A feed line 19 extends from an outlet of the compressor 4 to the inlet valves 16 of the respective hydrogen storage containers 6A - 6X. A dispense line 20 connects the dispense valves 17 of the respective hydrogen storage containers 6A - 6X to the dispensing facility 7. A re-pressurization line 21 connects each of the re-pressurization valves 18 to the feed line 19 via the compressor.

When a vehicle or other device or appliance is operatively connected to the dispensing facility 7, the dispense valve of the low pressure hydrogen storage container 6A is opened and hydrogen is supplied from the low pressure hydrogen storage container 6A to the vehicle until the pressure in the vehicle's fuel tank equals the pressure in the low pressure hydrogen storage tank 6A. The dispense valve 17 is then closed, and the dispense valve 17 of the next hydrogen storage container is then opened. In a final step the vehicle fuel tank is connected to the final hydrogen storage tank 6X by opening the associated dispense valve 17. The pressure in the final hydrogen storage container 6X exceeds the required pressure in the vehicle fuel tank. When the pressure in the fuel tank reaches the desired value (typically 350 bar or 700 bar for cars), the dispense valve 17 is closed off and the vehicle is disconnected from the dispense facility 7.

The hydrogen storage containers 6A - 6X can be refilled by opening the valve 13 and the inlet valves 16 of one or more or all of the hydrogen storage containers 6A - 6X. A hydrogen storage container can also recharge one of the other hydrogen storage containers via the re-pressurization line 21 and the compressor 4 by opening the re-pressurization valve 18 and the inlet valve 16 of the receiving hydrogen storage container while the valve 13 is closed. Although the valve 13 is closed, the electrolyser 2 can still continue producing hydrogen due to the intermediate hydrogen storage container 3.

## Claims

1. Fueling station for hydrogen powered devices, the fueling station comprising:
- a hydrogen generator;
- a compressor in communication with an outlet of the hydrogen generator;
- one or more hydrogen storage container
- a feed line extending from an outlet of the compressor to inlet valves of the one or more hydrogen storage containers;
- a dispensing facility;
- a dispense line connecting the one or more hydrogen storage containers to the dispensing facility, a power connection connecting the hydrogen generator to a power grid,
**characterized in that** the power connection is configured to power the hydrogen generator when the power grid is overloaded.

2. Fueling station according to claim 1, comprising a cascading array of hydrogen storage containers, each having an inlet valve, a dispense valve, and a re-pressurization valve;
the fueling station further comprising a re-pressurization line connecting each of the re-pressurization valves to the feed line via the compressor.

3. Fueling station according to claim 1 or 2, wherein at least one of the hydrogen storage containers comprises a container head encasing the inlet valve, the dispense valve and/or the re-pressurization valve, and solenoids driving the inlet valve, the dispense valve and/or the re-pressurization valve.

4. Fueling station according to any one of the preceding claims, further comprising a water reservoir feeding the hydrogen generator, wherein at least one of the one or more hydrogen storage containers is within the water reservoir.

5. Fueling station according to any one of the preceding claims, further comprising an intermediate hydrogen storage container between the hydrogen generator and the compressor.

6. Fueling station according to any one of the preceding claims, wherein the hydrogen generator comprises one or more electrolysers, such as one or more PEM electrolysers.
